# EUROPÄISCHE PATENTSCHRIFT

(11) **EP 3 272 198 B1**
(45) Veröffentlichungstag und Bekanntmachung des Hinweises auf die Patenterteilung: **04.08.2021**
(21) Anmeldenummer: 17181614.3
(22) Anmeldetag: 17.07.2017
(51) Int. Cl.: A01D 34/416

(54) **SCHNEIDAUFSATZ FÜR EINE SCHNEIDVORRICHTUNG**
CUTTING ATTACHMENT FOR A CUTTING DEVICE
EMBOUT DE COUPE POUR UN DISPOSITIF DE COUPE

(30) Priorität: 20.07.2016 DE 102016113336
(43) Veröffentlichungstag der Anmeldung: 24.01.2018
(73) Patentinhaber: Flötzer, Klaus, 77767 Appenweier (DE)
(72) Erfinder: Flötzer, Klaus, 77767 Appenweier (DE)
(74) Vertreter: Straube, Urs Norman

(56) Entgegenhaltungen:
- DE-U1- 20 014 973
- FR-A1- 2 559 018
- US-A- 4 685 279
- US-A1- 2002 073 556

## Beschreibung

Die vorliegende Erfindung betrifft einen Schneidaufsatz für eine Schneidvorrichtung, insbesondere für eine Motorsense, gemäß dem Oberbegriff des Patentanspruchs 1.

Ein solcher Schneidaufsatz für eine Schneidvorrichtung, insbesondere für eine Motorsense, ist aus der DE 200 14 973 U1 bekannt. Der Schneidaufsatz umfasst ein erstes Spannelement, ein zweites Spannelement und ein Zwischenelement, wobei das erste Spannelement einen ersten Verbindungsabschnitt aufweist, wobei das zweite Spannelement einen zweiten Verbindungsabschnitt aufweist, wobei das Zwischenelement eine Verbindungsöffnung aufweist, wobei der erste Verbindungsabschnitt an dem zweiten Verbindungsabschnitt durch die Verbindungsöffnung hindurch für eine erste Ausrichtung, in der Schneidfäden zwischen dem ersten Spannelement und dem Zwischenelement eingespannt werden können, so lösbar befestigbar ist, dass sich das Zwischenelement zwischen dem ersten Spannelement und dem zweiten Spannelement befindet, wobei das Zwischenelement eine Aussparung aufweist, wobei die Verbindungsöffnung durch die Aussparung verläuft, wobei der erste Verbindungsabschnitt an dem zweiten Verbindungsabschnitt durch die Verbindungsöffnung hindurch für eine zweite Ausrichtung des Zwischenelements, in der Schneidfäden zwischen dem zweiten Spannelement und dem Zwischenelement eingespannt werden können und zu der die erste Ausrichtung umgekehrt ist, so lösbar befestigbar ist, dass sich das Zwischenelement zwischen dem ersten Spannelement und der zweiten Spannelement befindet. Scheidfäden können über oder unter dem Zwischenelement durchgeführt werden, um unterschiedliche Schnitthöhen zu ermöglichen.

Ein Nachteil des Schneidaufsatzes besteht darin, dass dieser nicht zum Bürsten geeignet ist.

Weitere Schneidaufsätze sind aus der FR 2 559 018 A1, der US 4 685 297, der US 2002/0073556 A1, der DE 10 2012 016 026 B4, der EP 0 919 237 B1, der EP 0 910 237 B1, der EP 1 415 524 A1, der EP 2 340 702 A1, der US 6 052 907 und der DE 24 22 651 A bekannt. Abgesehen von dem Schneidaufsatz aus der DE 10 2012 016 026 B4 ermöglichen diese jedoch keine unterschiedlichen Schnitthöhen.

Der vorliegenden Erfindung liegt die Aufgabe zugrunde, einen weiteren Schneidaufsatz zu schaffen, der unterschiedliche Schnitthöhen erlaubt.

Die der Erfindung zugrunde liegende Aufgabe wird durch einen Schneidaufsatz für eine Schneidvorrichtung, insbesondere eine Motorsense, mit einem ersten Spannelement, einem zweiten Spannelement und einem Zwischenelement gelöst, wobei in der Aussparung ein Auflagevorsprung ausgebildet ist, wobei ein Basisabschnitt des zweiten Spannelements für die erste Ausrichtung des Zwischenelements so in die Aussparung einführbar ist, dass er an dem Auflagevorsprung anliegt, wobei das erste Spannelement für die zweite Ausrichtung des Zwischenelements, an einer Auflagefläche des Zwischenelements anliegt, welche am Rand der Aussparung vorgesehen ist. Im Zusammenhang mit der vorliegenden Erfindung befindet sich das Zwischenelement zwischen dem ersten Spannelement und dem zweiten Spannelement, wenn es sich zumindest teilweise zwischen dem ersten Spannelement und dem zweiten Spannelement befindet. Die beiden Verbindungsabschnitte können direkt miteinander (so dass sie sich berühren) oder indirekt durch weitere Verbindungsmittel wie beispielsweise Schrauben miteinander verbunden werden (ohne dass sie sich berühren), wobei die Verbindungsöffnung die Verbindung zwischen den beiden Spannelementen ermöglicht. Bei der Verwendung als Bürste wird jeder Schneidfaden in der Regel durch zwei benachbarte Löcher durchgezogen, wobei die Enden eines jeden Schneidfadens jeweils eine Borste bilden. Die Anzahl der beim Bürsten verwendeten Schneidfäden ist somit unabhängig von der Anzahl der beim Mähen verwendeten Schneidfäden, und es kann eine höhere Anzahl von Schneidfäden beim Bürsten als beim Mähen verwendet werden, wodurch die Leistungsfähigkeit beim Mähen erhöht wird. Vorzugsweise ist die Anzahl der durchgehenden Löcher mindestens 8, noch bevorzugter mindestens 12. Das zweite Spannelement ist vorzugsweise so ausgebildet, dass es die Löcher nicht bedeckt. Die durchgehenden Löcher verlaufen vorzugsweise im Wesentlichen parallel zu der Drehachse des Schneidaufsatzes, das heißt der Winkel ihrer Längsachse zu der Drehachse des Schneidaufsatzes beträgt nicht mehr als 15 Grad, vorzugsweise weniger als 5 Grad, besonders bevorzugt verlaufen die durchgehenden Löcher parallel zu der Drehachse des Schneidaufsatzes. Vorzugsweise sind die durchgehenden Löcher auf einem Kreis angeordnet. Vorzugsweise haben das erste Spannelement, das zweite Spannelement und das Zwischenelement eine rotationsymmetrische Grundform, wobei die Symmetrieachsen jeweils identisch mit der Drehachse sind, um welche sich der Schneidaufsatz dreht. Eine rotationssymmetrische Grundform ist die Form eines Körpers, der Teile aufweist, die rotationssymmetrisch ausgebildet ist, wobei der Körper abgesehen von Einzelheiten, wie beispielsweise Löcher oder Schlitze, die um den Umfang verteilt sind, vorzugsweise vollkommen rotationssymmetrisch ausgebildet ist. Vorzugsweise verlaufen die durchgehenden Löcher parallel zu der Drehachse des Mähaufsatzes. Vorzugsweise sind die durchgehenden Löcher kreisförmig angeordnet. Vorzugsweise weist der Auflagevorsprung eine ringförmige Auflagevorsprungsfläche auf. Vorzugsweise steht die Drehachse des Schneidaufsatzes senkrecht auf der Auflagevorsprungsfläche. Die Aussparung ermöglicht einen tiefen Schnitt des Schneidkopfes. Vorzugsweise ist die Auflagefläche des Zwischenelements ringförmig ausgebildet. Vorzugsweise steht die Drehachse des Schneidaufsatzes senkrecht auf der Auflagefläche. Die unterschiedlichen Ausrichtungen des Zwischenelements ermöglichen unterschiedlich tiefe Schnitte des Schneidkopfs in Abhängigkeit von der Ausrichtung. Vorzugsweise ist die erste Ausrichtung umgekehrt zu der zweiten Ausrichtung (Für das Zwischenelement ist "oben" in der ersten Ausrichtung "unten" in der zweiten Ausrichtung). In Zusammenhang mit der vorliegenden Erfindung beziehen sich Positionsangaben auf eine Position in einer idealen Betriebsposition des Schneidaufsatzes. Vorteilhafterweise kommt der Schneidaufsatz mit mir drei Einzelteilen aus. Beim Mähen ist außerdem ein extremer Tiefschnitt möglich, wenn sich lediglich das zweite Spannelement unter den Schneidfäden befindet.

In einer bevorzugten Ausführungsform ist an dem ersten Verbindungsabschnitt ein Gewinde ausgebildet, und ist an dem zweiten Verbindungsabschnitt ein Gegengewinde ausgebildet ist. Die beiden Gewinde sind aufeinander abgestimmt.

In noch einer bevorzugten Ausführungsform ist an dem ersten Verbindungsabschnitt ein Innengewinde ausgebildet ist, und ist an dem zweiten Verbindungsabschnitt ein Außengewinde ausgebildet ist. Die beiden Gewinde sind aufeinander abgestimmt.

In noch einer bevorzugten Ausführungsform weist das erste Spannelement einen Oberabschnitt auf, in dem ein Montagegewinde ausgebildet ist. Das Montagegewinde dient zur Befestigung des Schneidaufsatzes an der Welle einer Motorsense.

In noch einer bevorzugten Ausführungsform weist das erste Spannelement einen unteren Flansch auf. Vorzugsweise ist eine erste Spannfläche auf der Unterseite des unteren Flansches ausgebildet. Vorzugsweise ist die erste Spannfläche ringförmig ausgebildet. Vorzugsweise steht die Drehachse des Schneidaufsatzes senkrecht auf der ersten Spannfläche.

In noch einer bevorzugten Ausführungsform sind in dem zweiten Verbindungsabschnitt Schlitze ausgebildet. Die Schlitze dienen zur Durchführung der Schneidfäden. Vorzugsweise sind die Schlitze nach oben offen. Dies ermöglicht eine leichte Einführung der Schneidfäden. Vorzugsweise sind jeweils zwei benachbarte Schlitze miteinander verbunden. Vorzugsweise münden die Schlitze in einem Hohlraum in dem zweiten Verbindungsabschnitt. Vorzugsweise sind die Schlitze senkrecht ausgebildet.

In noch einer bevorzugten Ausführungsform weist das Basiselement ein Flansch auf, der über den zweiten Verbindungsabschnitt auskragt. Vorzugsweise ist eine zweite Spannfläche an dem Rand auf der Oberseite des Flansches ausgebildet. Vorzugsweise ist die zweite Spannfläche ringförmig ausgebildet. Vorzugsweise steht die Drehachse des Schneidaufsatzes senkrecht auf der zweiten Spannfläche.

In noch einer Weiterbildung der letztgenannten bevorzugten Ausführungsform ist die Auflagefläche eine erste Auflagefläche, und verläuft jeweils eine Nut zwischen zwei benachbarten Löchern auf einer zweiten Auflagefläche, und liegt die erste Auflagefläche der zweiten Auflagefläche gegenüber (d.h. auf der gegenüberliegenden Seite des Zwischenelements). Vorzugsweise sind die einzelnen Nuten Abschnitt einer Nut, die vorzugsweise ringförmig ausgebildet ist. Vorzugsweise ist die zweite Auflagefläche ringförmig ausgebildet. Vorzugsweise steht die Drehachse des Schneidaufsatzes senkrecht auf der zweiten Auflagefläche.

In noch einer bevorzugten Ausführungsform münden die durchgehenden Löcher (an einem Ende) jeweils auf einer Seite des Zwischenelements, die (für eine Verwendung zum Bürsten) unten ist. Die durchgehenden Löcher sind vorzugsweise offen (insbesondere nicht von dem zweiten Spannelement bedeckt).

In noch einer bevorzugten Ausführungsform sind die durchgehenden Löcher um die Verbindungsöffnung herum angeordnet. Vorzugsweise sind sie mit der Verbindungsöffnung nicht verbunden. Vorzugsweise sind die durchgehenden Löcher kreisförmig um die Verbindungsöffnung angeordnet und vorzugsweise liegt die Verbindungsöffnung in der Mitte der kreisförmigen Anordnung der durchgehenden Löcher.

In noch einer bevorzugten Ausführungsform münden die durchgehenden Löcher (an einem anderen Ende) jeweils auf einer Seite des Zwischenelements, die (für eine Verwendung zum Bürsten) oben ist. Vorzugsweise wird ein Schneidfaden zum Bürsten) zwischen zwei benachbarten Öffnungen durchgezogen, wobei ein gebogener Mittelabschnitt zwischen den Mündungen der benachbarten Öffnungen verläuft.

In noch einer bevorzugten Ausführungsform verläuft (für eine Verwendung zum Bürsten) jeweils eine Nut (zur Durchführung eines Schneidfadens) zwischen zwei benachbarten durchgehenden Löchern. Vorzugsweise ist die Nut jeweils auf der Seite des Zwischenelements, die für eine Verwendung zum Bürsten oben ist, oder auf der Unterseite des ersten Spannelements oder sowohl auf der Seite des Zwischenelements, die für eine Verwendung zum Bürsten oben ist, als auch auf der Unterseite des ersten Spannelements ausgebildet. Vorzugsweise sind die Nuten miteinander verbunden und bilden vorzugsweise eine Ringnut.

Im Folgenden wird die Erfindung mit Bezugnahme auf die Zeichnungen näher beschrieben. Es zeigen:
FIG. 1A eine Unteransicht eines ersten Spannelements;
FIG. 1B eine perspektivische Ansicht des ersten Spannelements;
FIG. 1C eine Oberansicht des ersten Spannelements;
FIG. 1D eine weitere perspektivische Ansicht des ersten Spannelements;
FIG. 1E eine Seitenansicht des ersten Spannelements;
FIG. 1F eine Schnittansicht des ersten Spannelements entlang der Linie AA aus FIG. 1A;
FIG. 2A eine Oberansicht eines Zwischenelements;
FIG. 2B eine perspektivische Ansicht des Zwischenelements;
FIG. 2C eine Unteransicht des Zwischenelements;
FIG. 2D eine weitere perspektivische Ansicht des Zwischenelements;
FIG. 2E eine Schnittansicht des Zwischenelements entlang der Linie BB aus FIG. 2A;
FIG. 2F einen Ausschnitt der Schnittansicht des Zwischenelements;
FIG. 3A eine Unteransicht eines zweiten Spannelements;
FIG. 3B eine perspektivische Ansicht des zweiten Spannelements;
FIG. 3C eine Oberansicht des zweiten Spannelements;
FIG. 3D eine weitere perspektivische Ansicht des zweiten Spannelements;
FIG. 3E eine Schnittansicht des zweiten Spannelements entlang der Linie CC aus FIG. 3A;
FIG. 4A eine Unteransicht eines Schneidaufsatzes für eine erste Ausrichtung des Zwischenelements; und
FIG. 4B eine Schnittansicht des Schneidaufsatzes für die erste Ausrichtung des Zwischenelements.

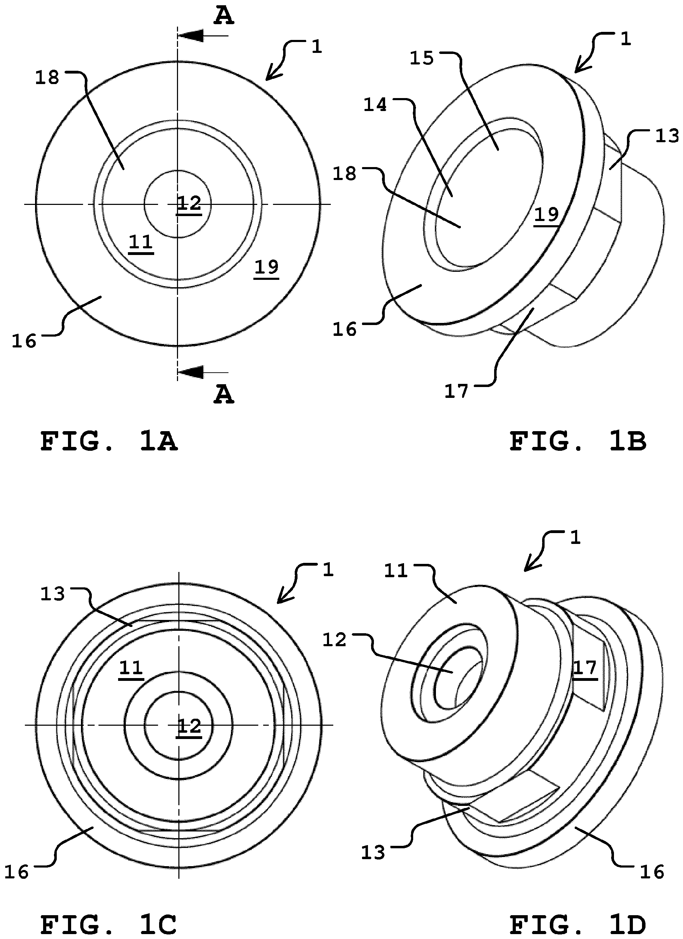

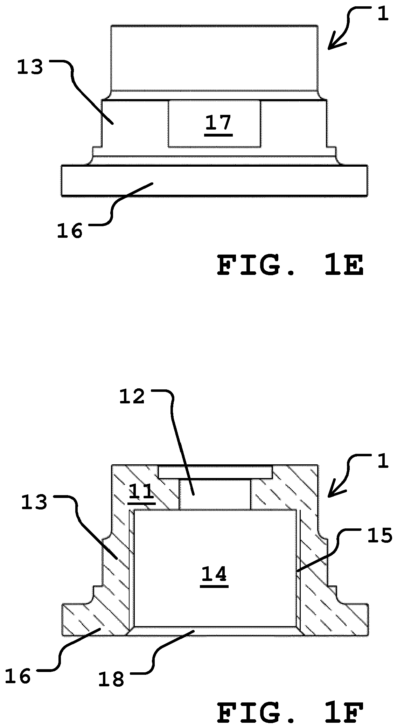

FIG. 1A, FIG. 1B, FIG. 1C, FIG. 1D, FIG. 1E und FIG. 1F zeigen das erste Spannelement 1. Das erste Spannelement 1 umfasst einen Oberabschnitt, der als Oberwand 11 mit einem Montagegewinde 12 ausgebildet ist, und einen Verbindungsabschnitt 13 mit einem zentralen Hohlraum 14, in dem ein Innengewinde 15 vorgesehen ist. Unten an dem Verbindungsabschnitt 13 ist ein auskragender Flansch 16 ausgebildet, der eine untere Öffnung 18 des Verbindungsabschnitts 13 umgibt und an dessen Unterseite eine ringförmige Spannfläche 19 ausgebildet ist. Außen an dem Verbindungsabschnitt sind Eingriffsmulden 17 für eine Zange oder Schraubenschlüssel vorgesehen. Das erste Spannelement 1 umfasst einen rotationssymmetrischen Grundkörper, dessen Rotationssymmetrie lediglich durch das Innengewinde 15 und die Eingriffsmulden 17 durchbrochen wird.

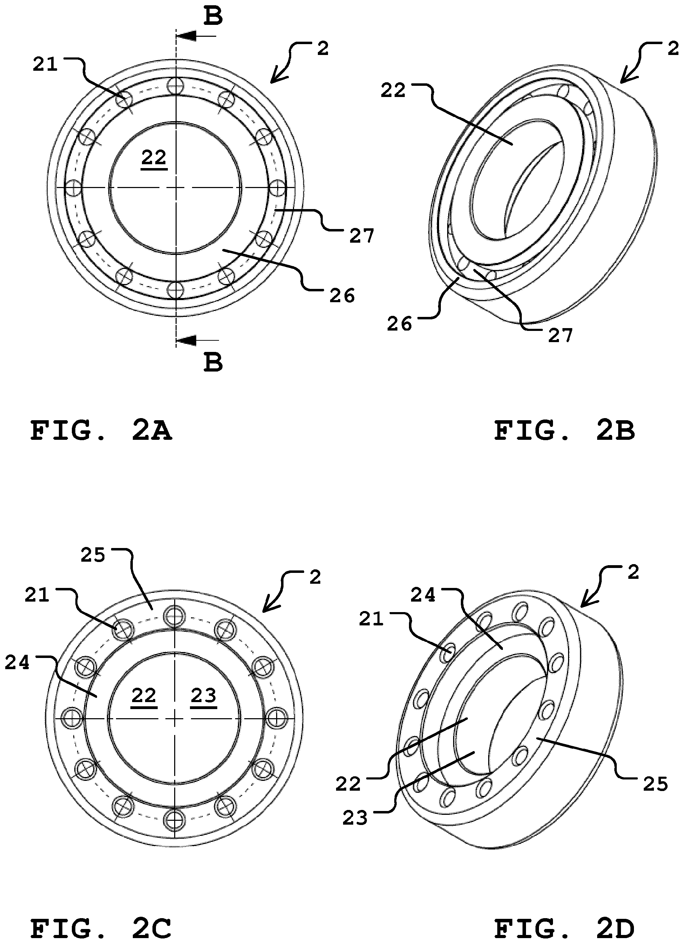

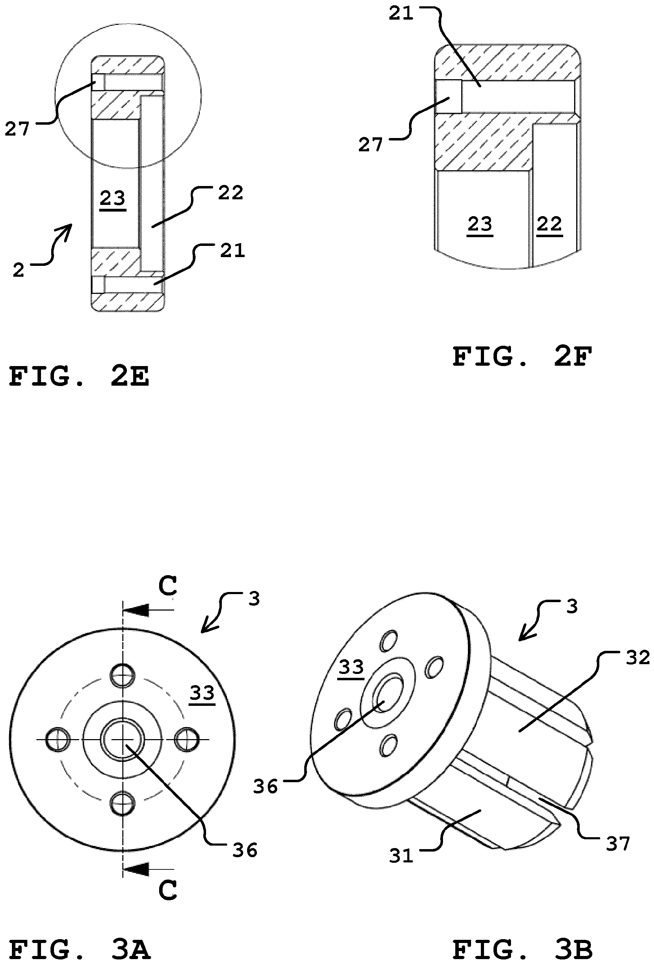

FIG. 2A, FIG. 2B, FIG. 2C, FIG. 2D, FIG. 2E und FIG. 2F zeigen das Zwischenelement 2. Das Zwischenelement 2 ist ringförmig ausgebildet, weist zwölf durchgehende Löcher 21 und eine zentrale Aussparung 22 auf. Die zentrale Aussparung 22 wird von einer ersten Auflagefläche 25 umgeben. Durch die zentrale Aussparung 22 verläuft die Verbindungsöffnung 23, welche von einem Auflagevorsprung 24 am Boden der Aussparung 22 umgeben wird. Gegenüber der ersten Auflagefläche 25 ist eine zweite Auflagefläche 26 ausgebildet. In der zweiten Auflagefläche 26 ist eine ringförmige Nut 27 ausgebildet. Die durchgehenden Löcher 21 verlaufen von der ersten Auflagefläche 25 zu der zweiten Auflagefläche 26 und münden in der ringförmigen Nut 27.

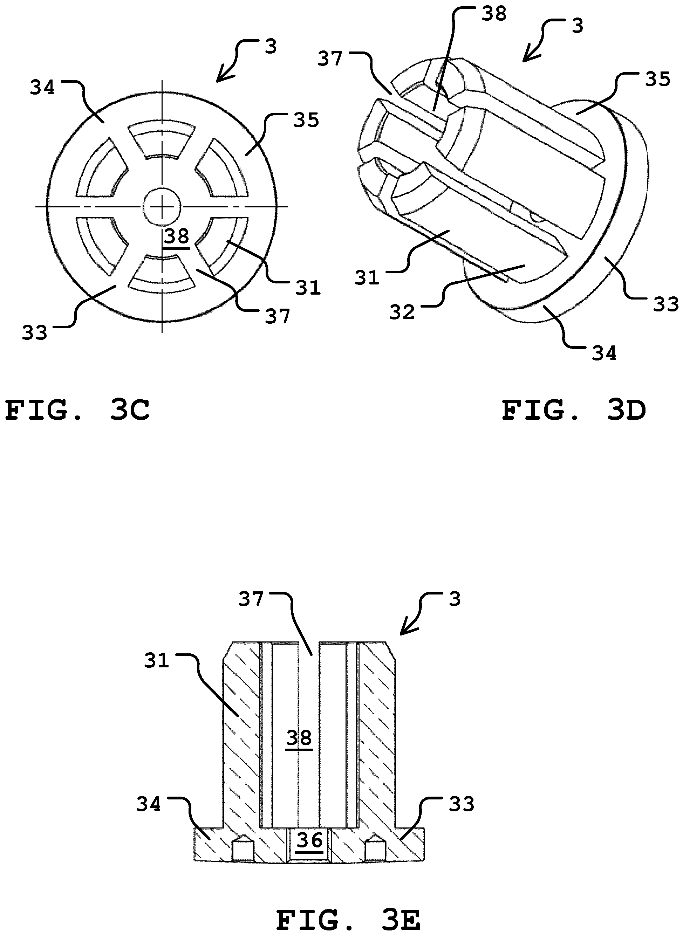

FIG. 3A, FIG. 3B, FIG. 3C, FIG. 3D und FIG. 3E zeigen das zweite Spannelement 3. Das zweite Spannelement 3 umfasst einen Verbindungsabschnitt 31, an dem ein Außengewinde 32 vorgesehen ist, und einen Basisabschnitt 33. Die Schlitze 37 sind oben offen, gehen durch eine Wand des Verbindungsabschnitts 31 und sind durch einen Hohlraum 38 im Inneren des Verbindungsabschnitts 31 miteinander verbunden. Der Basisabschnitt 33 umfasst einen auskragenden Flansch 34, der den Verbindungsabschnitt 31 umgibt. An der Oberseite des Basisabschnitts 33 ist eine ringförmige Spannfläche 35 ausgebildet. In der Mitte des Basisabschnitts 33 ist ein Befestigungsgewinde 36 für eine Verschleißschutzschraube (nicht gezeigt) vorgesehen. Das zweite Spannelement 3 umfasst einen rotationssymmetrischen Grundkörper, dessen Rotationssymmetrie lediglich durch das Außengewinde 32, die Schlitze 37 und weitere Aussparungen auf der Unterseite des Basisabschnitts 33 durchbrochen wird.

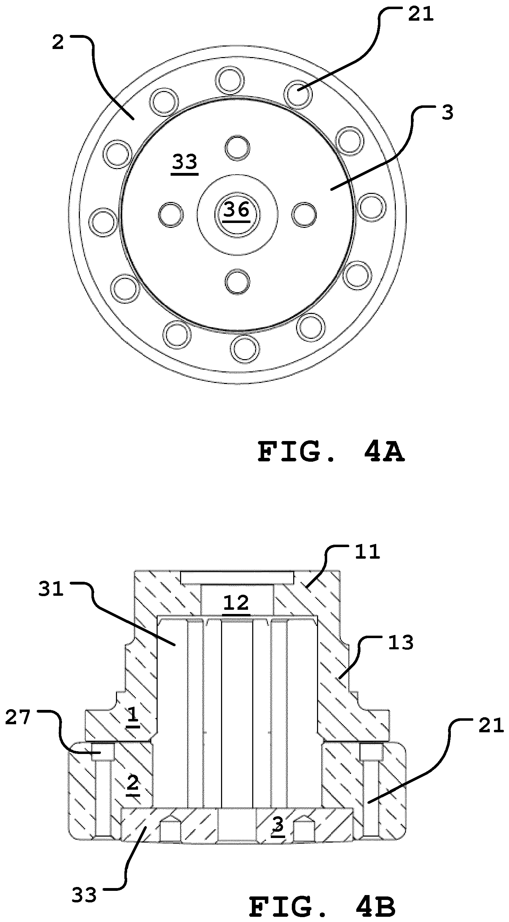

FIG. 4A und FIG. 4B zeigen den Schneidaufsatz für eine erste Ausrichtung des Zwischenelements 2. Für die erste Ausrichtung des Zwischenelements 2 ist die erste Spannfläche 19 (siehe FIG. 1A) des ersten Spannelements 1 der zweiten Auflagefläche 26 (siehe FIG. 2A) zugewandt, und liegt die zweite Spannfläche 35 (siehe FIG. 3C) an dem Auflagevorsprung 24 (siehe FIG. 2C) an. Im Gegensatz dazu ist das Zwischenelement 2 für eine zweite Ausrichtung umgedreht. Die erste Spannfläche 19 (siehe FIG. 1A) des ersten Spannelements 1 ist dann der ersten Auflagefläche 25 (siehe FIG. 2C) zugewandt, und die zweite Spannfläche 35 (siehe FIG. 3C) ist der zweiten Auflagefläche 26 (siehe FIG. 2A) zugewandt.

Der Schneidkopf kann für unterschiedliche Anwendungen wie folgt mit Schneidfäden bestückt werden:

### a.) Extratiefschnitt:

Für den Extratiefschnitt wird zunächst jeweils ein Schneidfaden zwischen zwei benachbarten Schlitzen des zweiten Spannelements 2 so hindurchgeführt, dass die freien Enden der Schneidfäden (insgesamt also maximal 3) jeweils gleich weit aus den Schlitzen hervorstehen. Dann wird das Zwischenelement 2 in der zweiten Ausrichtung über den Verbindungsabschnitt 31 gestülpt, und der erste Verbindungsabschnitt 13 wird so fest auf den zweiten Verbindungsabschnitt 31 geschraubt, dass die Schneidfäden zwischen der zweiten Auflagefläche des Zwischenelements 2 und der zweiten Spannfläche des zweiten Spannelements 3 eingespannt sind.

### b.) Tiefschnitt:

Für den Tiefschnitt wird zunächst das Zwischenelement 2 in der ersten Ausrichtung über den Verbindungsabschnitt 31 gestülpt. Der Basisabschnitt des zweiten Spannelements 3 wird in der Aussparung des Zwischenelements 2 aufgenommen. Dann wird jeweils ein Schneidfaden zwischen zwei benachbarten Schlitzen des zweiten Spannelements 2 so hindurchgeführt, dass die freien Enden der Schneidfäden jeweils gleich weit aus den Schlitzen des zweiten Verbindungsabschnitts 31 hervorstehen. Dann wird der erste Verbindungsabschnitt 13 so fest auf den zweiten Verbindungsabschnitt 31 geschraubt, dass die Schneidfäden zwischen der zweiten Auflagefläche des Zwischenelements 2 und der ersten Spannfläche des ersten Spannelements 1 eingespannt sind.

### c.) Hochschnitt:

Für den Hochschnitt wird zunächst das Zwischenelement 2 in der zweiten Ausrichtung über den Verbindungsabschnitt 31 gestülpt. Dann wird jeweils ein Schneidfaden zwischen zwei benachbarten Schlitzen des zweiten Spannelements 2 so hindurchgeführt, dass die freien Enden der Schneidfäden jeweils gleich weit aus den Schlitzen des zweiten Verbindungsabschnitts 31 hervorstehen. Dann wird der erste Verbindungsabschnitt 13 so fest auf den zweiten Verbindungsabschnitt 31 geschraubt, dass die Schneidfäden zwischen der ersten Auflagefläche des Zwischenelements 2 und der ersten Spannfläche des ersten Spannelements 1 eingespannt sind.

### d.) Doppelschnitt (Mulchen):

Für den Doppelschnitt wird zunächst jeweils ein Schneidfaden zwischen zwei benachbarten Schlitzen des zweiten Spannelements 2 so hindurchgeführt, dass die freien Enden der Schneidfäden (insgesamt also maximal 3) jeweils gleich weit aus den Schlitzen des zweiten Verbindungsabschnitts 31 hervorstehen. Dann wird das Zwischenelement 2 in der zweiten Ausrichtung über den Verbindungsabschnitt 31 gestülpt. Nochmals wird jeweils ein Schneidfaden zwischen zwei benachbarten Schlitzen des zweiten Spannelements 2 so hindurchgeführt, dass die freien Enden der Schneidfäden jeweils gleich weit aus den Schlitzen hervorstehen. Schließlich wird der erste Verbindungsabschnitt 13 so fest auf den zweiten Verbindungsabschnitt 31 geschraubt, dass die Schneidfäden zwischen der ersten Auflagefläche des Zwischenelements 1 und der ersten Spannfläche des ersten Spannelements 1 bzw. zwischen der zweiten Auflagefläche des Zwischenelements 2 und der zweiten Spannfläche des zweiten Spannelements 3 eingespannt sind.

### e.) Bürsten:

Zum Bürsten wird zunächst jeweils ein Schneidfaden durch zwei benachbarte Löcher 21 des Zwischenelements so hindurchgeführt, dass die freien Enden der Schneidfäden (insgesamt also maximal 6) jeweils gleich weit aus den Löchern 21 hervorstehen und sich die gebogenen Mittelabschnitte der Schneidfäden in der Nut 27 des Zwischenelements 2 befinden. Dann wird das Zwischenelement 2 in der ersten Ausrichtung über den Verbindungsabschnitt 31 gestülpt und der erste Verbindungsabschnitt 13 so fest auf den zweiten Verbindungsabschnitt 31 geschraubt, dass die zweite Auflagefläche des Zwischenelements 2 fest gegen die erste Spannfläche des ersten Spannelements 1 gepresst wird, und dass der Auflagevorsprung des Zwischenelements 2 fest gegen die zweite Spannfläche des zweiten Spannelements 3 gepresst wird.

### f.) Bürsten und Mulchen:

Zum Bürsten wird zunächst jeweils ein Schneidfaden durch zwei benachbarte Löcher 21 des Zwischenelements 2 hindurchgeführt, dass die freien Enden der Schneidfäden (insgesamt also maximal 6) jeweils gleich weit aus den Löchern 21 hervorstehen und sich die gebogenen Mittelabschnitte der Schneidfäden in der Nut des Zwischenelements 2 befinden. Dann wird das Zwischenelement 2 in der ersten Ausrichtung über den zweiten Verbindungsabschnitt 31 gestülpt. Ein Schneidfaden wird jeweils zwischen zwei benachbarten Schlitzen des zweiten Verbindungsabschnitts 31 so hindurchgeführt, dass die freien Enden der Schneidfäden jeweils gleich weit aus den Schlitzen des zweiten Verbindungsabschnitts 31 hervorstehen. Schließlich wird der erste Verbindungsabschnitt 13 so fest auf den zweiten Verbindungsabschnitt 31 geschraubt, dass die Schneidfäden fest zwischen der zweiten Auflagefläche des Zwischenelements 2 und der ersten Spannfläche des ersten Spannelements 1 eingespannt sind, und dass der Auflagevorsprung des Zwischenelements 2 fest gegen die zweite Spannfläche des zweiten Spannelements 3 gepresst wird.

## Patentansprüche

1. Schneidaufsatz für eine Schneidvorrichtung, insbesondere eine Motorsense, mit einem ersten Spannelement (1), einem zweiten Spannelement (3) und einem Zwischenelement (2), wobei das erste Spannelement (1) einen ersten Verbindungsabschnitt (13) aufweist, wobei das zweite Spannelement (3) einen zweiten Verbindungsabschnitt (31) aufweist, wobei das Zwischenelement (2) eine Verbindungsöffnung (22) aufweist, und wobei der erste Verbindungsabschnitt (13) an dem zweiten Verbindungsabschnitt (31) durch die Verbindungsöffnung (22) hindurch für eine erste Ausrichtung, in der Schneidfäden zwischen dem ersten Spannelement und dem Zwischenelement eingespannt werden können, so lösbar befestigbar ist, dass sich das Zwischenelement (2) zwischen dem ersten Spannelement (1) und dem zweiten Spannelement (3) befindet, wobei das Zwischenelement (2) eine Aussparung (23) aufweist, wobei die Verbindungsöffnung (22) durch die Aussparung (23) verläuft, wobei der erste Verbindungsabschnitt (13) an dem zweiten Verbindungsabschnitt (31) durch die Verbindungsöffnung (22) hindurch für eine zweite Ausrichtung des Zwischenelements (2), in der Schneidfäden zwischen dem zweiten Spannelement (3) und dem Zwischenelement (2) eingespannt werden können und zu der die erste Ausrichtung umgekehrt ist, so lösbar befestigbar ist, dass sich das Zwischenelement (2) zwischen dem ersten Spannelement (1) und der zweiten Spannelement (3) befindet, **dadurch gekennzeichnet, dass** in der Aussparung (23) ein Auflagevorsprung (24) ausgebildet ist, dass ein Basisabschnitt (33) des zweiten Spannelements (3) für die erste Ausrichtung des Zwischenelements (2) so in die Aussparung (23) einführbar ist, dass er an dem Auflagevorsprung (24) anliegt, und dass das erste Spannelement (1) für die zweite Ausrichtung des Zwischenelements (2) an einer Auflagefläche (25) des Zwischenelements (2) anliegt, welche am Rand der Aussparung (23) vorgesehen ist.

2. Schneidaufsatz nach Anspruch 1, **dadurch gekennzeichnet, dass** an dem Zwischenelement (2) mehrere durchgehende Löcher (21) zur Durchführung von Schneidfäden vorgesehen sind.

3. Schneidaufsatz nach einem der vorhergehenden Ansprüche, **dadurch gekennzeichnet, dass** in dem ersten Verbindungsabschnitt (13) ein Hohlraum mit einem Innengewinde (15) ausgebildet ist.

4. Schneidaufsatz nach einem der vorhergehenden Ansprüche, **dadurch gekennzeichnet, dass** erste Spannelement einen unteren Flansch (16) aufweist.

5. Schneidaufsatz nach einem der vorhergehenden Ansprüche, **dadurch gekennzeichnet, dass** in dem zweiten Verbindungsabschnitt (31) Schlitze (37) ausgebildet sind.

6. Schneidaufsatz nach einem der vorhergehenden Ansprüche, **dadurch gekennzeichnet, dass** an dem ersten Verbindungsabschnitt (13) ein Innengewinde (15) ausgebildet ist, und dass an dem zweiten Verbindungsabschnitt (31) ein Außengewinde (32) ausgebildet ist.

7. Schneidaufsatz nach einem der vorhergehenden Ansprüche, **dadurch gekennzeichnet, dass** das zweite Spannelement (3) einen Basisabschnitt (33) aufweist, und dass der Basisabschnitt (33) einen Flansch aufweist, der über den zweiten Verbindungsabschnitt (31) auskragt.

8. Schneidaufsatz nach einem der vorhergehenden Ansprüche, **dadurch gekennzeichnet, dass** das Zwischenelement (2) eine Aussparung (23) aufweist, dass die Verbindungsöffnung (22) durch die Aussparung (23) verläuft, dass in der Aussparung (23) ein Auflagevorsprung (24) ausgebildet ist, und dass der Basisabschnitt (33) für eine erste Ausrichtung des Zwischenelements (2) so in die Aussparung (23) einführbar ist, dass er an dem Auflagevorsprung (24) anliegt.

9. Schneidaufsatz nach Anspruch 8, **dadurch gekennzeichnet, dass** das erste Spannelement (1) für eine zweite Ausrichtung des Zwischenelements (2) an einer Auflagefläche (25) des Zwischenelements (2) anliegt, welche am Rand der Aussparung (23) vorgesehen ist.

10. Schneidaufsatz nach Anspruch 9, **dadurch gekennzeichnet, dass** die Auflagefläche (25) eine erste Auflagefläche (25) ist, und dass jeweils eine Nut (27) zwischen zwei benachbarten Löchern (21) auf einer zweiten Auflagefläche (26) verläuft, und dass die erste Auflagefläche (25) der zweiten Auflagefläche (26) gegenüberliegt.

11. Schneidaufsatz nach einem der Ansprüche 2 bis 10, **dadurch gekennzeichnet, dass** die durchgehenden Löcher (21) jeweils auf einer Seite des Zwischenelements (2) münden, die für eine Verwendung zum Bürsten unten ist.

12. Schneidaufsatz nach einem der Ansprüche 2 bis 11, **dadurch gekennzeichnet, dass** die durchgehenden Löcher (21) um die Verbindungsöffnung (22) herum angeordnet sind.

13. Schneidaufsatz nach einem der Ansprüche 2 bis 12, **dadurch gekennzeichnet, dass** die durchgehenden Löcher (21) jeweils auf einer Seite des Zwischenelements (2) münden, die für eine Verwendung zum Bürsten oben ist.

14. Schneidaufsatz nach Anspruch 13, **dadurch gekennzeichnet, dass** jeweils eine Nut zwischen zwei benachbarten durchgehenden Löchern (21) verläuft.

## Claims

1. Cutting attachment for a cutting device, in particular a string trimmer, comprising a first clamping element (1), a second clamping element (3) and an intermediate element (2), wherein the first clamping element (1) has a first connection portion (13), wherein the second clamping element (3) has a second connection portion (31), wherein the intermediate element (2) has a connection opening (22), and wherein the first connection portion (13) can be fastened in a detachable manner to the second connection portion (31) through the connection opening (22) for a first orientation, in which cutting lines can be clamped between the first clamping element and the intermediate element, in such a way that the intermediate element (2) is located between the first clamping element (1) and the second clamping element (3), wherein the intermediate element (2) has a recess (23), wherein the connection opening (22) extends through the recess (23), wherein the first connection portion (13) can be fastened in a detachable manner to the second connection portion (31) through the connection opening (22) for a second orientation of the intermediate element (2), in which cutting lines can be clamped between the second clamping element (3) and the intermediate element (2) and which is converse to the first orientation, in such a way that the intermediate element (2) is located between the first clamping element (1) and the second clamping element (3), **characterised in that** a support projection (24) is formed in the recess (23), **in that** a base portion (33) of the second clamping element (3) can be inserted into the recess (23) for the first orientation of the intermediate element (2) in such a way that said portion abuts the support projection (24), and **in that**, for the second orientation of the intermediate element (2), the first clamping element (1) abuts a support surface (25) of the intermediate element (2), which surface is provided at the edge of the recess (23).

2. Cutting attachment according to claim 1, **characterised in that** a plurality of through holes (21) are provided on the intermediate element (2) for feeding through cutting lines.

3. Cutting attachment according to any one of the preceding claims, **characterised in that** a cavity with an internal thread (15) is formed in the first connection portion (13) .

4. Cutting attachment according to any one of the preceding claims, **characterised in that** the first clamping element has a lower flange (16).

5. Cutting attachment according to any one of the preceding claims, **characterised in that** slots (37) are formed in the second connection portion (31).

6. Cutting attachment according to any one of the preceding claims, **characterised in that** an internal thread (15) is formed on the first connection portion (13), and **in that** an external thread (32) is formed on the second connection portion (31).

7. Cutting attachment according to any one of the preceding claims, **characterised in that** the second clamping element (3) has a base portion (33), and **in that** the base portion (33) has a flange which projects beyond the second connection portion (31).

8. Cutting attachment according to any one of the preceding claims, **characterised in that** the intermediate element (2) has a recess (23), **in that** the connection opening (22) extends through the recess (23), **in that** a support projection (24) is formed in the recess (23), and **in that** the base portion (33) can be inserted into the recess (23) for a first orientation of the intermediate element (2) in such a way that said portion abuts the support projection (24) .

9. Cutting attachment according to claim 8, **characterised in that**, for a second orientation of the intermediate element (2), the first clamping element (1) abuts a support surface (25) of the intermediate element (2), which surface is provided at the edge of the recess (23).

10. Cutting attachment according to claim 9, **characterised in that** the support surface (25) is a first support surface (25), and **in that** a groove (27) extends between each two adjacent holes (21) on a second support surface (26), and **in that** the first support surface (25) is opposite the second support surface (26).

11. Cutting attachment according to any one of claims 2 to 10, **characterised in that** the through holes (21) each open onto a side of the intermediate element (2) that is at the bottom to be used for brushing.

12. Cutting attachment according to any one of claims 2 to 11, **characterised in that** the through holes (21) are arranged around the connection opening (22).

13. Cutting attachment according to any one of claims 2 to 12, **characterised in that** the through holes (21) each open onto a side of the intermediate element (2) that is at the top to be used for brushing.

14. Cutting attachment according to claim 13, **characterised in that** a groove extends between each two adjacent through holes (21).

## Revendications

1. Embout de coupe pour un dispositif de coupe, en particulier une débroussailleuse, comportant un premier élément de serrage (1), un second élément de serrage (3) et un élément intermédiaire (2), le premier élément de serrage (1) comportant une première partie de raccordement (13), le second élément de serrage (3) comportant une seconde partie de raccordement (31), l'élément intermédiaire (2) comportant une ouverture de raccordement (22), et la première partie de raccordement (13) pouvant être attachée de façon amovible à la seconde partie de raccordement (31) à travers l'ouverture de raccordement (22) pour un premier alignement, dans lequel des fils de coupe peuvent être montés entre le premier élément de serrage et l'élément intermédiaire, de telle façon que l'élément intermédiaire (2) se trouve entre le premier élément de serrage (1) et le second élément de serrage (3), l'élément intermédiaire (2) comportant un évidement (23), l'ouverture de raccordement (22) s'étendant à travers l'évidement (23), la première partie de raccordement (13) pouvant être attachée de façon amovible à la seconde partie de raccordement (31) à travers l'ouverture de raccordement (22) pour un second alignement de l'élément intermédiaire (2), dans lequel des fils de coupe peuvent être montés entre le second élément de serrage (3) et l'élément intermédiaire (2) et par rapport auquel le premier alignement est inversé, de telle façon que l'élément intermédiaire (2) se trouve entre le premier élément de serrage (1) et le second élément de serrage (3), **caractérisé en ce qu'**une saillie d'appui (24) est formée dans l'évidement (23), **en ce qu'**une partie basale (33) du second élément de serrage (3) peut, pour le premier alignement de l'élément intermédiaire (2), être insérée dans l'évidement (23) de sorte qu'elle repose sur la saillie d'appui (24), et **en ce que** le premier élément de serrage (1) repose, pour le second alignement de l'élément intermédiaire (2), sur une surface d'appui (25) de l'élément intermédiaire (2), qui est prévue sur le bord de l'évidement (23).

2. Embout de coupe selon la revendication 1, **caractérisé en ce que** sur l'élément intermédiaire (2) sont prévus plusieurs trous traversants (21) conçus pour le passage de fils de coupe.

3. Embout de coupe selon l'une quelconque des revendications précédentes, **caractérisé en ce qu'**une cavité dotée d'un filetage interne (15) est formée dans la première partie de raccordement (13).

4. Embout de coupe selon l'une quelconque des revendications précédentes, **caractérisé en ce que** le premier élément de serrage comporte une bride inférieure (16).

5. Embout de coupe selon l'une quelconque des revendications précédentes, **caractérisé en ce que** des rainures (37) sont formées dans la seconde partie de raccordement (31).

6. Embout de coupe selon l'une quelconque des revendications précédentes, **caractérisé en ce qu'**un filetage interne (15) est formé sur la première partie de raccordement (13), et **en ce qu'**un filetage externe (32) est formé sur la seconde partie de raccordement (31).

7. Embout de coupe selon l'une quelconque des revendications précédentes, **caractérisé en ce que** le second élément de serrage (3) comporte une partie basale (33), et **en ce que** la partie basale (33) comporte une bride qui fait saillie au-dessus de la seconde partie de raccordement (31).

8. Embout de coupe selon l'une quelconque des revendications précédentes, **caractérisé en ce que** l'élément intermédiaire (2) comporte un évidement (23), **en ce que** l'ouverture de raccordement (22) s'étend à travers l'évidement (23), **en ce qu'**une saillie d'appui (24) est formée dans l'évidement (23), et **en ce que** la partie basale (33) peut, pour un premier alignement de l'élément intermédiaire (2), être insérée dans l'évidement (23), de sorte qu'elle repose sur la saillie d'appui (24).

9. Embout de coupe selon la revendication 8, **caractérisé en ce que** le premier élément de serrage (1) repose, pour un second alignement de l'élément intermédiaire (2), sur une surface d'appui (25) de l'élément intermédiaire (2), qui est prévue sur le bord de l'évidement (23).

10. Embout de coupe selon la revendication 9, **caractérisé en ce que** la surface d'appui (25) est une première surface d'appui (25), et **en ce qu'**une gorge (27) entre deux trous (21) voisins s'étend chaque fois sur une seconde surface d'appui (26), et **en ce que** la première surface d'appui (25) fait face à la seconde surface d'appui (26).

11. Embout de coupe selon l'une quelconque des revendications 2 à 10, **caractérisé en ce que** les trous traversants (21) débouchent chacun sur une côté de l'élément intermédiaire (2) qui est au-dessous pour une utilisation pour le brossage.

12. Embout de coupe selon l'une quelconque des revendications 2 à 11, **caractérisé en ce que** les trous traversants (21) sont disposés autour de l'ouverture de raccordement (22).

13. Embout de coupe selon l'une quelconque des revendications 2 à 12, **caractérisé en ce que** les trous traversants (21) débouchent chacun sur un côté de l'élément intermédiaire (2) qui est au-dessus pour une utilisation pour le brossage.

14. Embout de coupe selon la revendication 13, **caractérisé en ce qu'**une gorge s'étend chaque fois entre deux trous traversants (21) voisins.
